# EUROPEAN PATENT SPECIFICATION

(11) **EP 1 679 958 B1**
(45) Date of publication and mention of the grant of the patent: **08.10.2008**
(21) Application number: 04774967.6
(22) Date of filing: 27.09.2004
(51) Int. Cl.: A01K 61/00

(54) **APPARATUS AND METHOD FOR BREEDING SHELLFISH**
VORRICHTUNG UND VERFAHREN ZUM ZÜCHTEN VON SCHALENTIEREN
APPAREIL ET PROCEDE D'ELEVAGE DE MOLLUSQUES

(30) Priority: 26.09.2003 NL 1024391
(43) Date of publication of application: 19.07.2006
(73) Proprietor: Nederlandse Organisatie voor Toegepast-Natuurwetenschappelijk Onderzoek TNO, 2628 VK Delft (NL)
(72) Inventor: DE VRIES, Leo Bernard, NL-2614 AA Delft (NL); OORSCHOT, Ronald Willem Arie, NL-4462 BG Goes (NL)
(74) Representative: van Loon, C.J.J.
(86) International application number: PCT/NL2004/000665
(87) International publication number: WO 2005/029951

(56) References cited:
- WO-A-01/76359
- FR-A- 2 452 876
- FR-A- 2 542 572
- US-A- 4 244 323
- US-A1- 2001 029 694

## Description

The invention relates to an apparatus for breeding shellfish such as mussels, oysters and like shellfish.

Shellfish such as mussels and oysters grow by clinging, in preferably flowing water, to each other and/or to elements present in the water, such as stones, plants, threads and the like. For the purpose of breeding shellfish, this is utilized by providing obstacles near the coast to which the shellfish to be bred can properly cling. Depending on the species, the shellfish will cling better to surfaces or to threads and/or to each other.

It has been found that as a result of shellfish farming near coasts, the need for food increases. As a consequence, the growth of the shellfish may be less than desired, with less quality. Moreover, for the purpose of planting, maintaining and harvesting, persons with vessels and the like must approach the breeding locations, which puts a further pressure on the respective area. This is disadvantageous specifically for nature reserves and regions with special and/or vulnerable biodiversities.

FR 2 452 876 discloses a structure for breeding in open water, having a number of layers of arrays of breeding elements (triangular baskets), which construction is provided with four smaller buoys, and a central larger buoy, which latter buoy can be filled with air through a channel. The contraption is fixed to the waterbed by a chain. Since the breeding elements are suspended from said buoys these can never be brought above the water surface.

US2001/0029694 discloses a fish trap comprising a frame of interconnected hollow frame member and a screen attached to the frame to form a fish trap enclosure. Means are provided for allowing fish and sea creatures of a predetermined size to enter into the fish trap enclosure from outside of the fish trap habitat while prohibiting fish and sea creatures of predetermined size from exiting. Means are provided for raising and lowering the trap enclosure. All of these embodiments have a substantially closed bottom forming at least part of floating means.

FR 2 542 572 discloses a structure and a method for breeding seafood. A structure with horizontally arranged floating bodies and/or ballast tanks is applied. For retraction from the seabed, the floating bodies/ballast tanks are asymmetrically filled with air, thereby tipping the structure such that it releases from the sea bed more easily.

One object of the invention is to provide an apparatus with which shellfish can be bred in an economically and environmentally advantageous manner.

A particular object of the invention is to provide such an apparatus with which the need for food especially in coastal areas and vulnerable nature preserves is reduced.

A further object of the invention is to provide such an apparatus with which qualitatively attractive shellfish can be bred.

A still further object of the invention is to provide such an apparatus which is safe in use and in particular enables maintenance, placing seed and/or shellfish and harvesting, even in relatively heavy weather.

A yet further object of the invention is to provide a method for breeding shellfish which obviates at least a number of the disadvantages of the known methods described in the introduction.

These and comparable objects are at least partly achieved with, respectively, an apparatus and a method according to the invention as defined in claims 1 and 14 respectively.

The invention utilizes the insight that it would afford particular advantages to breed shellfish at a relatively great distance from the coast, in open water. In such areas, there is a large supply of space and of food for the shellfish and the presence of the shellfish will have a less great impact on the flora and fauna, in particular also as a result of currents that will occur at such places.

An apparatus according to the invention, by virtue of the breeding surfaces arranged above each other, affords a relatively large surface for shellfish to cling to and/or to rest on and/or to cling to each other, while both shellfish conventionally preferring to cling to threads and/or each other and shellfish conventionally preferring to cling to surfaces and/or each other can be bred thereon. As a result of the virtually completely open structure of the frame, water is given an opportunity, in use, to flow substantially completely freely between and along the breeding surfaces and thereby to reach the shellfish.

By the use of substantially cylinder-shaped floating bodies and/or ballast means, of which the longitudinal axis including an angle with the breeding surfaces and during use extending substantially vertically the apparatus according to the invention, during use, can be positioned in open water, and in particular be wholly or partly sunk, in particular to a depth chosen such that the apparatus, at least the breeding surfaces, are disposed completely under water, at such a position that they sustain substantially no influence from wave action at the water surface. Through directed control of the buoyancy of the floating bodies, in particular using ballast means such as, for instance, water that can be pumped into and out of the floating bodies, the position of the apparatus during use can be accurately controlled and, for instance, be adjusted to operating conditions.

By the use of a substantially open structure with floating bodies with a ballast capacity, a further advantage is achieved in that the apparatus is suitable for open water and has a self lifting power. During use, the ballasts means can be filled, so that the apparatus is forced under the water surface and held so. Water can flow freely along the breeding surfaces for supply of food and removal of waste material. In the case of contaminations, inspection, maintenance, harvesting, and the like, the apparatus can be brought at least in part, and preferably for the most part, above water, thereby allowing ready and fast access in a safe manner.

Owing to the floating bodies and/or ballast means being spaced apart a relatively large distance, the advantage is achieved that a great stability is obtained, in particular when the height of the apparatus is considerablysmaller than the distance referred to, in particular the smallest distance between the floating bodies. The ratio between the height and the above-mentioned distance is for instance preferably less than 1/5, more in particular less than 1/7. Naturally, dimensions and ratios can be optimally chosen in each case, depending on the desired application, location, structure and the like. Of relevance in this connection are, for instance, the number, buoyancy, attitude and structure of the floating bodies.

The breeding surfaces of an apparatus according to the invention are preferably manufactured from plastic, in particular plastic mats, plaiting, plates or the like, having holes therein through which water, but no shellfish, can pass and on which the shellfish can adhere. The breeding surfaces are preferably built up from rows and/or columns of growing elements such as plates, troughs or the like, whose joint base surfaces substantially form the breeding surfaces. Optionally, upstanding edges may be provided, thereby preventing seed and/or shellfish floating or washing away. Paths can be provided between rows and/or columns of growing elements, allowing for instance persons or apparatuses for the purpose of maintaining and planting seed or shellfish and/or harvesting same to move between the growing elements. Additionally, or instead, the growing elements can be arranged so as to be movable individually or in groups.

Preferably, at least four floating bodies and/or ballast means are provided, for obtaining substantially rectangular frame, with the floating bodies and/or ballast means at the corners. The floating bodies and/or ballast means are substantially cylinder-shaped, at least elongated with a longitudinal axis extending at an angle relative to the breeding surfaces, in particular at an angle of more than 45° and preferably approximately 90°. Thus, a high stability is obtained and the sides of the apparatus can remain open maximally. The breeding surfaces are preferably included within the frame, for additional protection. Floating bodies and/or ballast means having a relatively great length and small cross section, i.e. as a cylinder, and whose longitudinal axes extend substantially vertically, moreover provide the advantage that they yield a great stability while involving a relatively small waterline surface, which improves swell. Floating bodies can for instance be manufactured from thin-walled tubes.

The breeding surfaces are preferably arranged relatively closely above each other, without this adversely affecting water flowing between them. For instance, the mutual distance is between 10 cm and 100 cm, more particularly between 10 cm and 50 cm. A distance between 25 and 50 cm gives a high density per volume and hence a relatively large available breeding surface, while the surfaces are sufficiently far apart for, for instance, throughflow, maintenance, placement, support and harvesting.

In an alternative embodiment, within the frame, a number of subframes are provided, each carrying a part of the growing elements. The subframes are individually movable relative to the frame, so that only a portion of the shellfish needs to be brought above a water surface for, for instance, maintenance, inspection or harvesting.

The invention further relates to a method for breeding shellfish such as mussels, oysters and the like, characterized by the features according to claim 14.

With such a method, surprisingly, in a simple, safe and economic manner, shellfish can be bred offshore, in open water. In the method, breeding surfaces are arranged in open water in layers above each other, such that shellfish can attach to them and/or can rest on them, while water can flow along them for nutrition and removal of waste material.

For maintenance, harvesting and other jobs, an apparatus according to the invention can be approached in open water with a vessel for transport of persons and for instance for producing pumping power, whereby the apparatus can be brought wholly or partly independently above water with its own floating means and ballast means, by, for instance, pumping ballast means such as water out of the floating means and/or ballast means in a controlled manner. For bringing the apparatus in a suspended position under water, in turn ballast means is then introduced into the floating means and/or ballast means.

Further advantageous embodiments of apparatuses and methods according to the invention are set forth in the subclaims. For clarification, embodiments of an apparatus and method according to the invention will be elucidated in more detail with reference to the drawing, in which:
Fig. 1 shows in perspective view an apparatus according to the invention, with, for simplicity, just one breeding surface schematically drawn in;
Fig. 2 shows in side elevation an apparatus according to the invention, with breeding surfaces next to and above each other, in a suspended position under water;
Fig. 3 shows in side view an apparatus according to the invention, in floating position, with a portion of a breeding surface in top plan view;
Fig. 4 shows in side elevation an apparatus according to the invention, in an alternative embodiment; and
Fig. 5 schematically shows in top plan view an apparatus according to the invention.

The embodiments given in the drawing and description are only exemplary embodiments and are not in any way limitative of the invention. Herein, in the different embodiments, the same or corresponding parts have the same or corresponding reference numerals.

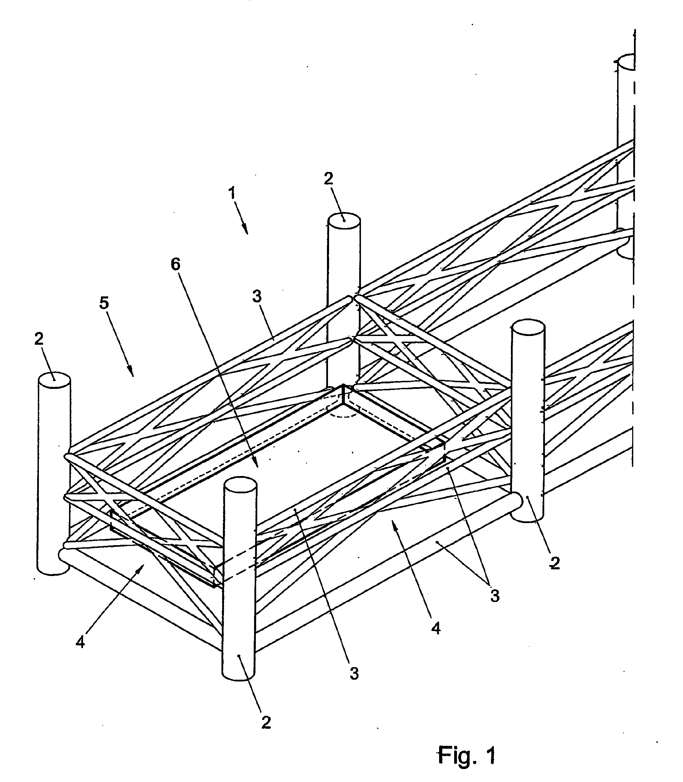

Fig. 1 shows in perspective view a linked apparatus 1 for breeding shellfish, comprising four cylinder-shaped floating bodies and/or ballast means 2, mutually connected by four frame parts 4 built up from substantially tubes, rods or like constructional elements 3. The frame parts 4, together with the floating bodies and/or ballast means 2, constitute a stiff construction and function as frame 5. Within the frame 5, a series of breeding surfaces 6 are arranged above each other, of which only one is shown in Fig. 1, for simplicity. The or each breeding surface is built up from a number of rows of growing elements 7, arranged next to each other, with paths 8 between them, over which, for instance, people can walk or a harvesting and/or maintenance apparatus 9 can move. Such an apparatus has for instance an arm or scraper to bring seed onto the breeding elements 7 and/or to harvest shellfish 10 (represented exaggeratedly large) therefrom.

An apparatus 1 according to the invention can be relatively large, so that a high stability and moreover a large breeding surface are obtained. Length, width and height can naturally be chosen on the basis of for instance desired breeding area, stability, allowable movements in or on the water and the like. The height is preferably relatively small in proportion to the horizontal dimensions. By way of illustration, examples of dimensions are given, which should not be taken to be limitative in any way. Each breeding surface can for instance involve a few hundreds of square meters within the frame 5, a breeding surface being for instance 10 to 100 meters wide and 10 to 100 meters long. The height of the apparatus is then for instance between 5 and 10 meters, with, for instance, 10 to 40 breeding surfaces provided above each other, with an intermediate distance of between 25 and 50 cm. Naturally, these dimensions and numbers are given only by way of illustration and should not be taken to be limitative in any way.

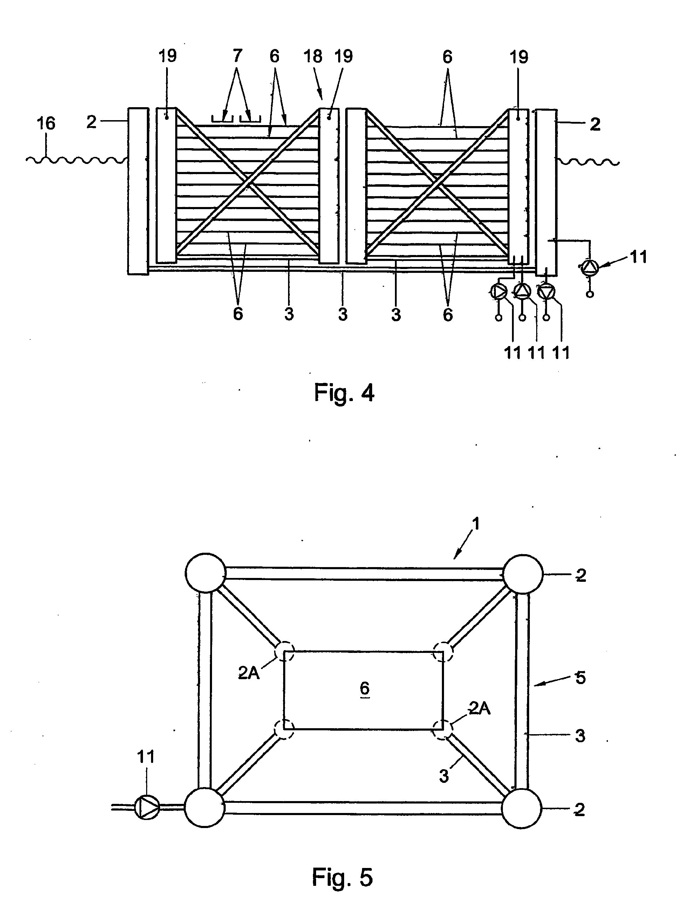

In Fig. 5, schematically, an apparatus 1 according to the invention is shown, with four floating bodies and/or ballast means 2 being represented, at the corners of a rectangle. Shown between these is a breeding surface 6, carried by the frame 5. With the aid of broken lines, four further floating bodies and/or ballast means 2A are drawn in, adjacent the corners of the breeding surface 6. Such floating bodies and/or ballast means 2A may be advantageous for a higher stability, greater buoyancy and/or smaller floating bodies and/or ballast means and a simpler construction, since the loads on the frame 5 will be reduced.

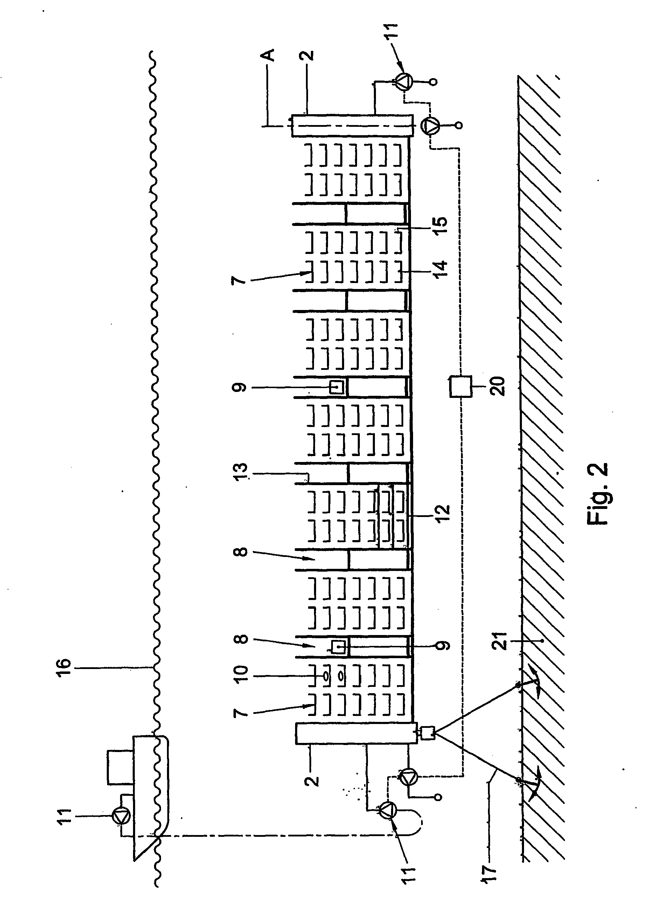

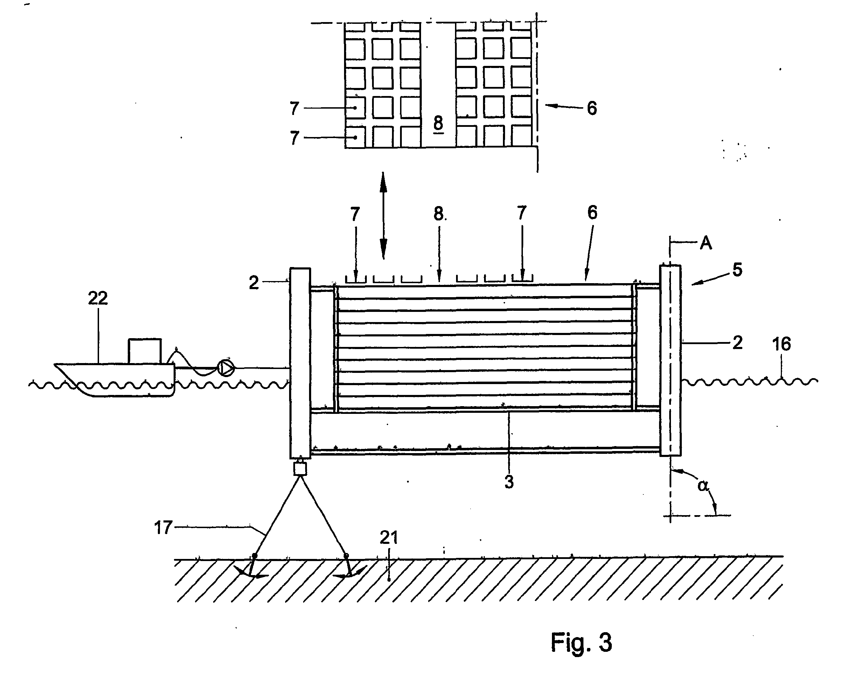

The floating bodies and/or ballast means 2 have a longitudinal axis A which extends approximately vertically, so that an advantageous floating position is obtained and moreover a maximally open frame can be obtained. Moreover, in this way, a relatively small waterline surface is obtained. Substantially vertical should herein be understood to mean including an angle with a horizontal line that is greater than 30 degrees, more particularly greater than 45 degrees, and preferably more than 60 degrees. Pumping means 11 are provided for pumping water, in particular seawater, into and out of the floating means 2. In this way, the buoyancy of the apparatus can be set in each case, such that the apparatus obtains a desired position in or under the water, as shown in Figs. 2 and 3. Preferably, stabilization means 20 are provided with which in each case the optimum buoyancy of each individual floating body 2 can be set, for instance in view of swell, different loading of the parts of the breeding surfaces 6 or progressive growth of the shellfish. It is preferred that the setting of the position of the apparatus is controlled automatically and preferably passively, for instance with siphon mechanisms or the like. In this way, the necessary maintenance is reduced and safety enhanced. Moreover, no permanent control is necessary.

In an alternative embodiment, the pumping means 11 are placed on a vessel 20, as shown in Fig. 2. In case of maintenance, harvesting, inspection or the like, these pumping means can then be connected to the apparatus 1, so that the position thereof can be set. Afterwards, the pumping means 11 can then be uncoupled again. With a single vessel 20, several apparatuses 1 can then be served. Moreover, in this way, for instance maintenance, repair and operation of the apparatus have been simplified.

As shown in Fig. 2, the breeding surfaces 6, at least the individual growing elements 7 or groups of growing elements 7, are disposed on rails 12 connected with the frame 5, for instance by cross beams 13. The growing elements 7 are plates or trough-shaped elements with a bottom 14, preferably manufactured from metal or, in particular, plastic. Particularly suitable, though not exclusively-so, are thermoplastic plastics such as PE, preferably combined with metal frame parts. The plates or bottoms 14 are preferably perforated or at least provided with apertured, so that water can flow through them and shellfish 10 can rest on them and/or attach to them. Accordingly, the growing elements 7 are individually placeable and removable or possibly slidable relative to each other and/or the frame 5. Via the paths 8, persons or the apparatus 9 referred to can move along the elements 7. Trough-shaped elements 7 have the advantage that the edge 15 standing up from the bottom 14 prevents shellfish being washed off the bottom 14. The upstanding edge 15 is preferably, like the bottom 14, water transmissive and relatively open.

As shown in Fig. 2, the apparatus can be sunk to a depth under the water surface 16 that is chosen such that little influence is sustained from wave action at the surface 16, while the apparatus does not rest on the bottom 21. Anchoring means 17 are provided for keeping the apparatus 1 in place. Such anchoring means-can for instance be known anchoring means, used for instance with storage tankers for oil platforms or for mooring ships and the like in the sea. The apparatus 1 preferably has some freedom of movement, so that undesirably great forces on the frame 5 and the breeding surfaces are prevented. In principle, an apparatus 1 could also rest on the bottom, but preferably this is prevented in order to prevent damage to the apparatus 1 and to the bottom 21.

For e.g. maintenance, planting shellfish and/or harvesting them, the apparatus 1 is preferably brought to the floating position shown in Fig. 3 by increasing the buoyancy of the floating means and/or ballast means 2 by pumping water out of them. As a result of specifically the openness of the structure of the frame 5, this can be done in a particularly safe manner. The breeding surfaces are secured, such that they do not dislodge as the apparatus 1 is raised and lowered.

In an alternative embodiment, as shown in Fig. 4, within the frame 5 with the floating means and/or ballast means 2, a number of subframes 18 are provided, each comprising a series of breeding surfaces 6, at least growing elements 7, above each other. The subframes 18, including the breeding surfaces 6, at least growing elements 7, can for instance move vertically relative to the frame 5, such that only a portion of the shellfish need to be brought above the water surface. To that end, the subframes 18 may be provided with sub-floating means and/or ballast means 19, comparable to the floating means and/or ballast means 2, but may also be provided, for instance, with mechanical and/or pneumatic and/or hydraulic lifting means or the like, with which at least one desired vertical movement can be obtained. The subframes 18 are preferably provided such that they cannot, at least not unintentionally so, move out of the frame 5. Optionally, the subframes may be coupled to the floating bodies and/or ballast means via-cables, such that if the floating bodies and/or ballast means are moved down, the subframes are moved up and vice versa. In this way, a simple operation has been obtained.

In the drawing, in each case, four floating bodies and/or ballast means are shown at the corner points of a rectangle. It will be immediately clear, however, that also other numbers may be provided and/or in other positions, for instance three at the corner points of a triangular frame, or more than four, while some or all of the floating bodies and/or ballast means may be offset relative to the corner points. Also, different frames 5 and/or subframes 18 may be mutually coupled and, for instance, have shared floating bodies and/or ballast means, as shown in Fig. 1.

An apparatus according to the invention is preferably placed at a relatively great distance from a nearby coast, for instance more than one sea mile, so that a good food supply is possible and existing flora and fauna are hardly, if at all, hindered. Thus, an apparatus according to the invention can be installed outside the territorial waters.

The invention is not limited in any way to the exemplary embodiments shown in the drawing and the description. Many variations thereon are possible within the framework of the invention as outlined by the claims.

For instance, the floating means and/or ballast means may be formed by closed tanks and be, for instance, water tanks. Also, in addition to floating bodies and/or ballast means, pull means may be provided for pulling the apparatus at least partly under water, or hoisting means, such as a pontoon, for at least supporting the hauling of the apparatus to the surface. Electrical and/or electronic means may be provided for (semi) automatically controlling the position of the apparatus and/or of the growing elements. If this is advantageous to the growth of the shellfish, the growing elements may also be designed to be tiltable to some extent.

## Claims

1. An apparatus for breeding shellfish (1) such as mussels, oysters and like shellfish to be bred in flowing water, comprising at least two mutually spaced apart floating bodies and/or ballast means (2, 19), which floating bodies and/or ballast means (2, 19) are mutually connected by connecting means (3, 4), such that an open frame (5) is formed by at least said connecting means, wherein at least between the floating bodie and/or ballast means (2, 19) a series of breeding surfaces (6) are provided, which breeding surfaces (6) extend substantially parallel to each other above each other, wherein the floating bodies and/or ballast means (2, 19) are substantially cylinder-shaped with a longitudinal axis including an angle with the breeding surfaces (6) and during use extending substantially vertically, such that the apparatus can be brought at least in part, and preferably for the most part, above water.

2. An apparatus according to claim 1, wherein the breeding surfaces (6) are formed by rows of growing elements (7) arranged substantially next to each other.

3. An apparatus according to claim 2, wherein paths (8) are provided between at least a number of rows of growing elements (7) located next to each other.

4. An apparatus according to any one of the preceding claims, wherein the breeding surfaces (6) are substantially manufactured from plastic, in particular plastic mats or plates provided with openings, such that shellfish can rest thereon and/or can attach thereto.

5. An apparatus according to any one of the preceding claims, wherein on or near the breeding surfaces (6) means (9) are provided for harvesting from the breeding surfaces shellfish growing thereon.

6. An apparatus according to any one of the preceding claims, wherein the frame (5) is provided with supporting means (12) on which the breeding surfaces (6), at least the growing elements (7), are mounted, such that at least parts of the breeding surfaces (6), in particular the growing elements (7), are removable individually and/or in groups.

7. An apparatus according to any one of the preceding claims, wherein on the breeding surfaces (6), upstanding edges (15) are provided for preventing the shellfish being carried along from the breeding surfaces (6) by flowing water.

8. An apparatus according to any one of the preceding claims, wherein at least four floating bodies and/or ballast means (2, 19) are provided, wherein the frame (5) is substantially rectangular and wherein the breeding surfaces (6) are situated between the floating bodies (2, 19) within the frame (5).

9. An apparatus according to any one of the preceding claims, wherein the distance between the floating bodies and/or ballast means (2, 19) is relatively large relative to the height of the frame (5), in particular at least three times the height and preferably at least five times the height.

10. An apparatus according to any one of the preceding claims, wherein the breeding surfaces (6) are situated relatively closely above each other in proportion to the height of the frame (5) and the distance between the floating bodies (2, 19), in particular with an intermediate distance between 0.1 and 1 meter, more in particular between 0.1 and 0.5 meter and preferably between 0.25 and 0.5 meter.

11. An apparatus according to any one of the preceding claims, wherein the floating bodies (2, 19) and/or ballast means (2, 19) are so designed that, with these, the apparatus, in open water, in particular seawater, can be brought under water into a suspended position and is substantially self-lifting.

12. An apparatus according to any one of the preceding claims, wherein within the frame (5) a number of subframes (18) are provided, each provided with floating means (19) and/or ballast means (19) and/or lifting means (19) for moving the subframes relative to the frame, with each subframe (18) comprising a series of breeding surface parts situated above each other.

13. An apparatus according to any one of the preceding claims, wherein the floating means (2, 19) and/or ballast means (2, 19) are substantially formed by cylinder-shaped tanks, provided with pumping means (11) for pumping seawater as ballast into and out of the tanks (2, 19) in a controlled manner during use.

14. A method for breeding shellfish such as mussels, oysters and the like, wherein an apparatus provided with a number of breeding surfaces (6) extending above each other and positioned substantially horizontally is positioned in open water, in particular seawater, wherein shellfish and/or shellfish seed are provided on said breeding surfaces (6) and are grown on the breeding surfaces (6), the apparatus being so designed with at least partly open sides that said water flows freely between and along the breeding surfaces (6) for supplying food, wherein the apparatus is brought under a water surface into a substantially suspended position using floating bodies and/or ballast means (2, 19), wherein the floating bodies and/or ballast means (2, 19) are substantially cylinder-shaped with a longitudinal axis including an angle with the breeding surfaces and during use extending substantially vertically, such that the apparatus can be brought at least in part, and preferably for the most part, above water.

15. A method according to claim 14, wherein for harvesting shellfish from the breeding surfaces (6) and/or maintenance of the apparatus, the apparatus is brought into a position floating substantially above the water, wherein the apparatus is approached using a vessel (20, 22), and shellfish and/or shellfish seed are brought from said vessel (20, 22) onto the breeding surfaces and/or shellfish are brought from said breeding surfaces (6) into said vessel (20, 22) and/or said maintenance is carried out from said vessel (20, 22).

16. A method according claim 14 or 15, wherein the apparatus is positioned at least 1 sea mile off a most nearby coast and preferably outside territorial waters.

## Patentansprüche

1. Vorrichtung zum Züchten von Schalentieren (1), wie etwa Muscheln, Austern und ähnlichen Schalentieren, die in fließendem Wasser zu züchten sind, mit mindestens zwei gegenseitig beabstandeten schwimmenden Körpern und/oder Ballastmitteln (2, 19), wobei die schwimmenden Körper und/oder Ballastmittel (2, 19) gegenseitig so durch Verbindungsmittel (3, 4) verbunden sind, dass ein offener Rahmen (5) durch zumindest die Verbindungsmittel gebildet wird, wobei zumindest zwischen den schwimmenden Körpern und/oder Ballastmitteln (2, 19) eine Reihe von Züchtflächen (6) bereitgestellt sind, die sich im wesentlichen parallel zueinander übereinander erstrecken, wobei die schwimmenden Körper und/oder Ballastmittel (2, 19) im wesentlichen zylinderförmig mit einer Längsachse sind, die mit den Züchtflächen (6) einen Winkel aufweist und während der Verwendung im wesentlichen vertikal verläuft, so dass die Vorrichtung zumindest teilweise und bevorzugt zum größten Teil über Wasser gebracht werden kann.

2. Vorrichtung nach Anspruch 1, bei der die Züchtflächen (6) durch Reihen von Wachstumselementen (7) gebildet werden, die im wesentlichen nebeneinander angeordnet sind.

3. Vorrichtung nach Anspruch 2, bei der Wege (8) zwischen zumindest einer Anzahl von Reihen von nebeneinander angeordneten Wachstumselementen (7) vorgesehen sind.

4. Vorrichtung nach einem der vorhergehenden Ansprüche, bei der die Züchtflächen (6) im wesentlichen aus Kunststoff hergestellt sind, insbesondere Kunststoffmatten oder -platten, die mit Öffnungen versehen sind, so dass Schalentiere daran ruhen und/oder sich daran befestigen können.

5. Vorrichtung nach einem der vorhergehenden Ansprüche, bei der an den oder in der Nähe der Züchtflächen (6) Mittel (9) zum Ernten von an den Züchtflächen wachsenden Schalentieren von diesen vorgesehen sind.

6. Vorrichtung nach einem der vorhergehenden Ansprüche, bei der der Rahmen (5) mit Stützmitteln (12) ausgestattet ist, an denen die Züchtflächen (6), zumindest die Wachstumselemente (7), so befestigt sind, dass zumindest Teile der Züchtflächen (6), insbesondere die Wachstumselemente (7), einzeln und/oder in Gruppen entfernbar sind.

7. Vorrichtung nach einem der vorhergehenden Ansprüche, bei der an den Züchtflächen (6) hochstehende Ränder (15) vorgesehen sind, um zu verhindern, dass die Schalentiere durch fließendes Wasser von den Züchtflächen (6) weggetragen werden.

8. Vorrichtung nach einem der vorhergehenden Ansprüche, bei der mindestens vier schwimmende Körper und/oder Ballastmittel (2, 19) vorgesehen sind, wobei der Rahmen (5) im wesentlichen rechtwinklig ist und wobei sich die Züchtflächen (6) zwischen den schwimmenden Körpern (2, 19) innerhalb des Rahmens (5) befinden.

9. Vorrichtung nach einem der vorhergehenden Ansprüche, bei der der Abstand zwischen den schwimmenden Körpern und/oder Ballastmitteln (2, 19) in Bezug auf die Höhe des Rahmens (5) relativ groß ist, insbesondere mindestens dreimal die Höhe und bevorzugt mindestens fünfmal die Höhe.

10. Vorrichtung nach einem der vorhergehenden Ansprüche, bei der sich die Züchtflächen (6) im Verhältnis zu der Höhe des Rahmens (5) und dem Abstand zwischen den schwimmenden Körpern (2, 19) relativ dicht übereinander befinden, insbesondere mit einem Zwischenabstand zwischen 0,1 und 1 Meter, speziell zwischen 0,1 und 0,5 Meter und bevorzugt zwischen 0,25 und 0,5 Meter.

11. Vorrichtung nach einem der vorhergehenden Ansprüche, bei der die schwimmenden Körper (2, 19) und/oder Ballastmittel (2, 19) so ausgestaltet sind, dass die Vorrichtung mit diesen in offenem Wasser, insbesondere Meerwasser, unter Wasser in eine schwebende Position gebracht werden kann und im wesentlichen selbstanhebend ist.

12. Vorrichtung nach einem der vorhergehenden Ansprüche, bei der innerhalb des Rahmens (5) eine Anzahl von Unterrahmen (18) vorgesehen ist, von denen jeder mit schwimmenden Mitteln (19) und/oder Ballastmitteln (19) und/oder Hebemitteln (19) zum Bewegen der Unterrahmen in Bezug auf den Rahmen ausgestattet ist, wobei jeder Unterrahmen (18) eine Reihe von Züchtflächenteilen aufweist, die übereinander angeordnet sind.

13. Vorrichtung nach einem der vorhergehenden Ansprüche, bei der die schwimmenden Mittel (2, 19) und/oder Ballastmittel (2, 19) im wesentlichen durch zylinderförmige Tanks gebildet werden, die mit einer Pumpeinrichtung (11) ausgestattet sind, um während der Verwendung in einer gesteuerten Weise Meerwasser als Ballast in die und aus den Tanks (2, 19) zu pumpen.

14. Verfahren zum Züchten von Schalentieren, wie etwa Muscheln, Austern und dergleichen, bei dem eine Vorrichtung, die mit einer Anzahl von Züchtflächen (6) ausgestattet ist, die übereinander verlaufen und im wesentlichen horizontal angeordnet sind, in offenem Wasser, insbesondere Meerwasser, angeordnet wird, wobei Schalentiere und/oder Schalentiersamen an den Züchtflächen (6) vorgesehen und auf den Züchtflächen (6) wachsen gelassen werden, wobei die Vorrichtung so mit zumindest teilweise offenen Seiten ausgestaltet ist, dass das Wasser zur Zufuhr von Nahrung frei zwischen den und entlang der Züchtflächen (6) strömt, wobei die Vorrichtung unter Verwendung von schwimmenden Körpern und/oder Ballastmitteln (2, 19) unter eine Wasseroberfläche in eine im wesentlichen schwebende Position gebracht wird, wobei die schwimmenden Körper und/oder Ballastmittel (2, 19) im wesentlichen zylinderförmig mit einer Längsachse sind, die mit den Züchtflächen einen Winkel aufweist und während der Verwendung im wesentlichen vertikal verläuft, so dass die Vorrichtung zumindest teilweise und bevorzugt zum größten Teil über Wasser gebracht werden kann.

15. Verfahren nach Anspruch 14, bei dem zum Ernten von Schalentieren von den Züchtflächen (6) und/oder Warten der Vorrichtung die Vorrichtung in eine Position gebracht wird, die im wesentlichen über dem Wasser schwimmt, wobei sich der Vorrichtung mit einem Schiff (20, 22) genähert wird und Schalentiere und/oder Schalentiersamen von dem Schiff (20, 22) auf die Züchtflächen gebracht werden und/oder Schalentiere von den Züchtflächen (6) in das Schiff (20, 22) gebracht werden und/oder von dem Schiff (20, 22) eine Wartung durchgeführt wird.

16. Verfahren nach Anspruch 14 oder 15, bei dem die Vorrichtung mindestens eine Seemeile entfernt von der nächsten Küste angeordnet wird und bevorzugt außerhalb von Hoheitsgewässern.

## Revendications

1. Appareil d'élevage de mollusques (1) tels que des moules, des huîtres et autres mollusques élevés dans les courants, comprenant au moins deux corps flottants et/ou ballasts (2, 19) espacés l'un de l'autre, lesquels corps flottants et/ou ballasts (2, 19) sont reliés entre eux par des moyens de liaison (3, 4) de manière à ce qu'un cadre ouvert (5) soit formé par au moins lesdits moyens de liaison, un ensemble de surfaces d'élevage (6) étant prévu au moins entre les corps flottants et/ou ballasts (2, 19), lesquelles surfaces d'élevage (6) s'étendent sensiblement parallèlement entre elles et les unes au-dessus des autres, **caractérisé en ce que** les corps flottants et/ou ballasts (2, 19) sont de forme sensiblement cylindrique avec un axe longitudinal formant un angle avec les surfaces d'élevage (6) et s'étendant sensiblement verticalement lors de l'utilisation, de manière à ce que l'appareil puisse être amené au moins partiellement, et de préférence en majeure partie, au-dessus de la surface de l'eau.

2. Appareil selon la revendication 1, **caractérisé en ce que** les surfaces d'élevage (6) sont formées de rangées d'éléments de culture (7) agencés sensiblement les uns à côté des autres.

3. Appareil selon la revendication 2, **caractérisé en ce que** des allées (8) sont prévues entre au moins un certain nombre de rangées d'éléments de culture (7) adjacents.

4. Appareil selon l'une quelconque des revendications précédentes, **caractérisé en ce que** les surfaces d'élevage (6) sont essentiellement réalisées en matière plastique, en particulier en mats ou plaques de plastique dotés d'ouvertures de manière à ce que les mollusques puissent reposer dessus et/ou s'y accrocher.

5. Appareil selon l'une quelconque des revendications précédentes, **caractérisé en ce que** des moyens (9) sont prévus sur ou près des surfaces d'élevage (6) pour récolter les mollusques croissant sur lesdites surfaces d'élevage.

6. Appareil selon l'une quelconque des revendications précédentes, **caractérisé en ce que** le cadre (5) est doté de moyens supports (12) sur lesquels les surfaces d'élevage (6) ou, pour le moins, les éléments de culture (7) sont montés de manière à ce qu'au moins des parties des surfaces d'élevage (6), notamment les éléments de culture (7), puissent être retirées individuellement et/ou de manière groupée.

7. Appareil selon l'une quelconque des revendications précédentes, **caractérisé en ce que** des rebords verticaux (15) sont prévus sur les surfaces d'élevage (6) pour empêcher les mollusques d'être entraînés par les courants hors des surfaces d'élevage (6).

8. Appareil selon l'une quelconque des revendications précédentes, **caractérisé en ce qu'**il est prévu au moins quatre corps flottants et/ou ballasts (2, 19), le cadre (5) étant de forme sensiblement rectangulaire et les surfaces d'élevage (6) étant situées entre les corps flottants (2, 19) à l'intérieur du cadre (5).

9. Appareil selon l'une quelconque des revendications précédentes, **caractérisé en ce que** la distance entre les corps flottants et/ou ballasts (2, 19) est relativement grande par rapport à la hauteur du cadre (5) et est en particulier égale à au moins trois fois, de préférence au moins cinq fois la hauteur.

10. Appareil selon l'une quelconque des revendications précédentes, **caractérisé en ce que** les surfaces d'élevage (6) sont relativement proches les unes au-dessus des autres en proportion de la hauteur du cadre (5) et de la distance entre les corps flottants (2, 19), leur espacement étant en particulier compris entre 0,1 et 1 mètre, plus particulièrement entre 0,1 et 0,5 mètre et de préférence entre 0,25 et 0,5 mètre.

11. Appareil selon l'une quelconque des revendications précédentes, **caractérisé en ce que** les corps flottants (2, 19) et/ou ballasts (2, 19) sont conçus de manière à ce que grâce à eux, l'appareil, lorsqu'il se trouve en eaux libres, en particulier dans l'eau de mer, puisse être immergé dans une position où il est en suspension, et soit sensiblement auto-élévateur.

12. Appareil selon l'une quelconque des revendications précédentes, **caractérisé en ce qu'**un certain nombre de sous-cadres (18) sont prévus à l'intérieur du cadre (5), chaque sous-cadre étant doté de moyens de flottaison (19) et/ou ballasts (19) et/ou moyens d'élévation (19) pour déplacer les sous-cadres par rapport au cadre, chaque sous-cadre (18) comprenant un ensemble de parties de surface d'élevage situées les uns au-dessus des autres.

13. Appareil selon l'une quelconque des revendications précédentes, **caractérisé en ce que** les moyens de flottaison (2, 19) et/ou les ballasts (2, 19) sont sensiblement formés par des réservoirs cylindriques dotés de moyens de pompage (11) permettant, lors de l'utilisation, de remplir ou de vider de manière contrôlée les réservoirs (2, 19) d'eau de mer en tant que ballast.

14. Procédé d'élevage de mollusques tels que des moules, des huîtres et similaires, dans lequel un appareil doté d'une pluralité de surfaces d'élevage (6) s'étendant les unes au-dessus des autres et positionnées sensiblement à l'horizontale est placé en eaux libres, notamment dans l'eau de mer, les mollusques et/ou larves de mollusques étant placés sur lesdites surfaces d'élevage (6) et étant élevés sur les surfaces d'élevage (6), l'appareil étant conçu avec des côtés au moins partiellement ouverts que l'eau traverse librement en longeant les surfaces d'élevage (6) pour apporter des nutriments, **caractérisé en ce que** l'appareil est immergé jusqu'à une position sensiblement de suspension à l'aide de corps flottants et/ou ballasts (2, 19), lesdits corps flottants et/ou ballasts (2, 19) étant de forme sensiblement cylindrique avec un axe longitudinal formant un angle avec les surfaces d'élevage et s'étendant sensiblement verticalement lors de l'utilisation, de manière à ce que l'appareil puisse être amené au moins partiellement, et de préférence en majeure partie, au-dessus de la surface de l'eau.

15. Procédé selon la revendication 14, **caractérisé en ce que** pour récolter les mollusques sur les surfaces d'élevage (6) et/ou entretenir l'appareil, celui-ci est amené dans une position où il flotte sensiblement au-dessus de la surface de l'eau, l'appareil étant approché à l'aide d'un navire (20, 22) et les mollusques et/ou larves de mollusque étant transférés dudit navire (20, 22) sur les surfaces d'élevage et/ou les mollusques étant transférés desdites surfaces d'élevage (6) vers ledit navire (20, 22) et/ou lesdites opérations d'entretien étant réalisées à partir dudit navire (20, 22).

16. Procédé selon la revendication 14 ou 15, **caractérisé en ce que** l'appareil est positionné au moins à 1 mille marin de la côte la plus proche, de préférence en dehors des eaux territoriales.
